# DEMANDE DE BREVET EUROPEEN

(11) **EP 4 400 572 A1**
(43) Date de publication de la demande: **17.07.2024**
(21) Numéro de dépôt: 23151850.7
(22) Date de dépôt: 16.01.2023
(51) Int. Cl.: C12G 1/00, C12G 3/08, C12H 1/00

(54) **SYSTÈME, INSTALLATION ET PROCÉDÉ DE CONDITIONNEMENT DE JUS OU LIQUIDES CONTENANT DES SUCRES EN VUE DE LEUR FERMENTATION ALCOOLIQUE**

(71) Demandeur: Sonnay, Gilbert, 1522 Lucens (CH)
(72) Inventeur: Sonnay, Gilbert, 1522 Lucens (CH)
(74) Mandataire: ABREMA SA

(57) **Abrégé**

Il est notamment décrit un système de conditionnement (10) de jus ou liquides (M) contenant des sucres en vue de leur fermentation alcoolique, comprenant au moins un circuit de conditionnement (100) apte à permettre une circulation d'un jus ou liquide (M) contenant des sucres, tels des jus ou moûts de fruits. Le circuit de conditionnement (100) comprend notamment une conduite d'amenée (100.1) apte à permettre le prélèvement du jus ou liquide (M) depuis une cuve (C) ou autre espace de stockage du jus ou liquide (M). Le circuit de conditionnement (100) comprend en outre une conduite de conditionnement (100.2) couplée à une entrée (100.2A) à la conduite d'amenée (100.1) et apte à être traversée par le jus ou liquide (M). Le circuit de conditionnement (100) comprend par ailleurs une conduite de sortie (100.3) couplée à une sortie (100.2B) de la conduite de conditionnement (100.2) et apte à permettre la délivrance du jus ou liquide (M) conditionné au moyen de la conduite de conditionnement (100.2) vers une cuve (C) ou autre espace de stockage du jus ou liquide (M) conditionné. La conduite de conditionnement (100.2) comporte l'agencement en série d'au moins un dispositif de conditionnement magnétique ou électromagnétique (100M) destiné à soumettre le jus ou liquide (M) à une action magnétique et d'au moins un dispositif de dynamisation (100V) apte à soumettre le jus ou liquide (M) à une agitation mécanique.

## Description

### DOMAINE TECHNIQUE

La présente invention se rapporte de manière générale à un système et procédé de conditionnement de jus ou liquides contenant des sucres en vue de leur fermentation alcoolique. La présente invention se rapporte également à une installation de conditionnement de tels jus ou liquides comprenant un tel système de conditionnement. La présente invention est en particulier applicable au conditionnement de moûts de raisins en vue de leur vinification.

### ARRIÈRE-PLAN TECHNOLOGIQUE

Dans le cadre d'un processus de vinification de moûts et jus de raisins, il est typiquement d'usage d'ajouter des additifs, notamment des sulfites, aux fins d'agir comme protection contre des altérations éventuelles. Les sulfites sont en particulier utilisés pour leurs qualités d'antioxydants et d'antiseptiques. Malheureusement, l'ajout de sulfites peut aussi provoquer, chez les personnes qui y sont sensibles, des réactions tels des maux de tête, voire des réactions allergiques. Les sulfites sont au demeurant classés comme des additifs allergènes.

La réduction des sulfites est donc un enjeu de santé, ainsi qu'un enjeu d'image dans la mesure où la tendance à proposer des vins « sans sulfites » (tout du moins sans sulfites ajoutés) est en croissance continue, la présence de sulfites ne pouvant toutefois être totalement écartée dans la mesures où des sulfites sont naturellement produits, même en faible quantité, lors du processus de fermentation alcoolique.

L'ajout de sulfites, ou d'autres additifs à vocation antioxydante et/ou antiseptique, n'est par ailleurs pas fondamentalement compatible avec la mise en oeuvre d'un processus de vinification biologique ou de biodynamie conforme à une démarche qui se veut durable.

Il est donc souhaitable de trouver des solutions qui permettent de limiter, voire de s'affranchir totalement de l'utilisation d'additifs.

### EXPOSÉ DE L'INVENTION

Un but général de la présente invention est de proposer un système et un procédé de conditionnement de jus et liquides contenant des sucres en vue de leur fermentation alcoolique qui remédie aux inconvénients et limitations des solutions de l'état de la technique.

En particulier, un but de la présente invention est de proposer une telle solution qui limite, voire évite l'utilisation d'additifs, tels des sulfites, dans le processus de fermentation alcoolique.

Un autre but de l'invention est de propose une telle solution qui soit peu coûteuse à produire et à mettre en oeuvre.

Encore un autre but de la présente invention est de proposer une telle solution qui assure que le jus ou liquide ainsi conditionné soit compatible avec des processus répondant à une exigence d'agriculture et de production essentiellement biologique ou de biodynamie, respectueuse du produit et des consommateurs.

La présente invention répond au moins en partie à ces buts en proposant un système de conditionnement de jus ou liquides contenant des sucres en vue de leur fermentation alcoolique dont les caractéristiques sont énumérées dans la revendication 1, à savoir un tel système de conditionnement comprenant au moins un circuit de conditionnement apte à permettre une circulation d'un jus ou liquide contenant des sucres, tels des jus ou moûts de fruits. Le circuit de conditionnement comprend notamment une conduite d'amenée apte à permettre le prélèvement du jus ou liquide depuis une cuve ou autre espace de stockage du jus ou liquide. Le circuit de conditionnement comprend en outre une conduite de conditionnement couplée à une entrée à la conduite d'amenée et apte à être traversée par le jus ou liquide. Le circuit de conditionnement comprend par ailleurs une conduite de sortie couplée à une sortie de la conduite de conditionnement et apte à permettre la délivrance du jus ou liquide conditionné au moyen de la conduite de conditionnement vers une cuve ou autre espace de stockage du jus ou liquide conditionné. Selon l'invention, la conduite de conditionnement comporte l'agencement en série d'au moins un dispositif de conditionnement magnétique ou électromagnétique destiné à soumettre le jus ou liquide à une action magnétique et d'au moins un dispositif de dynamisation apte à soumettre le jus ou liquide à une agitation mécanique.

Selon une variante de réalisation avantageuse, la conduite de conditionnement comporte l'agencement en série de plusieurs segments de conduite comportant chacun l'agencement en série d'un dispositif de conditionnement magnétique ou électromagnétique et d'un dispositif de dynamisation.

Selon une variante de réalisation préférée, chaque dispositif de dynamisation est apte à soumettre le jus ou liquide à une agitation mécanique selon un cheminement sensiblement hélicoïdal ou tourbillonnant.

Avantageusement, chaque dispositif de dynamisation comporte une section de tube et est configuré de sorte à générer un vortex à l'intérieur de la section de tube entre une entrée et une sortie du dispositif de dynamisation. Plus spécifiquement, cette section de tube est préférablement pourvue d'un raccord d'entrée et d'un raccord de sortie configurés pour induire ledit vortex.

Préférablement, chaque dispositif de conditionnement magnétique ou électromagnétique comporte une section de tube à l'intérieur de laquelle est disposée une âme magnétique ou électromagnétique de sorte à ce que le jus ou liquide soit conduit à circuler au travers d'un espace intercalaire subsistant entre l'âme magnétique ou électromagnétique et une circonférence interne de la section de tube. Dans ce contexte, l'âme magnétique ou électromagnétique peut en particulier comporter une alternance d'éléments magnétiques ou électromagnétiques de pôles inversés séparés par des entretoises. Ces éléments magnétiques ou électromagnétiques séparés par les entretoises sont préférablement agencés à l'intérieur d'un élément tubulaire retenu à chaque extrémité à l'intérieur de la section de tube. Par ailleurs, la section de tube peut avantageusement être pourvue d'un raccord d'entrée et d'un raccord de sortie configurés pour maintenir l'âme magnétique ou électromagnétique à l'intérieur de la section de tube, lesquels raccords d'entrée et sortie sont préférablement configurés pour induire un mouvement de rotation du jus ou liquide autour de l'âme magnétique ou électromagnétique.

Le système de conditionnement selon l'invention est avantageusement utilisé pour le conditionnement de jus ou liquides contenant des sucres en vue de leur fermentation alcoolique. Plus spécifiquement encore, le système de conditionnement selon l'invention est préférablement utilisé pour le conditionnement de moûts ou jus de raisins dans le cadre d'un processus de vinification, mais d'autres applications sont envisageables, notamment dans le cadre de la production de cidres ou d'autres alcools ou boissons alcoolisées.

L'invention porte également sur une installation de conditionnement de jus ou liquides contenant des sucres en vue de leur fermentation alcoolique, comprenant un système de conditionnement selon l'invention couplé à une pompe apte à assurer la circulation du jus ou liquide au travers du circuit de conditionnement et au moins une cuve de stockage contenant le jus ou liquide à conditionner.

La conduite d'amenée et la conduite de sortie du système de conditionnement peuvent en particulier être couplées à une même cuve de stockage afin de soumettre le jus ou liquide à un ou plusieurs cycles de conditionnement, en particulier deux à quatre cycles.

L'invention porte également sur un procédé de conditionnement de jus ou liquides contenant des sucres en vue de leur fermentation alcoolique dont les caractéristiques sont énumérées dans la revendication indépendante 13, à savoir un tel procédé comprenant la circulation d'un jus ou liquide contenant des sucres, tels des jus ou moûts de fruits, dans un circuit de conditionnement configuré de sorte à soumettre le jus ou liquide circulant au travers du circuit de conditionnement à une action magnétique ainsi qu'à une dynamisation par agitation mécanique.

Ce procédé est préférablement mis en oeuvre au moyen du système de conditionnement selon l'invention ou de l'installation de conditionnement selon l'invention.

Le procédé de conditionnement selon l'invention est en particulier mis en oeuvre pour le conditionnement de moûts ou jus de raisins dans le cadre d'un processus de vinification, étant une fois de plus rappelé que d'autres applications sont envisageables.

D'autres aspects de l'invention sont exposés dans la suite de la présente description.

### DESCRIPTION SOMMAIRE DES DESSINS

Les caractéristiques et avantages de la présente invention apparaîtront plus clairement à la lecture de la description détaillée qui suit de divers modes de réalisation de l'invention, lesquels sont présentés uniquement à titre d'exemples non limitatifs et sont illustrés par les dessins annexés où :
- la Figure 1 est une vue schématique d'une installation de conditionnement selon un mode de réalisation préféré de l'invention, laquelle inclut un système de conditionnement comprenant une conduite de conditionnement comprenant l'agencement en série de plusieurs segments de conduite comportant chacun un dispositif de conditionnement magnétique et un dispositif de dynamisation à vortex ;
- la Figure 2 est une vue schématique latérale de l'un des dispositifs de conditionnement magnétique de la Figure 1 ;
- les Figure 3A et 3B sont des vues schématiques, respectivement latérale et de face, d'un raccord disposé à l'entrée et à la sortie d'une section de tube du dispositif de conditionnement magnétique de la Figure 2 ;
- les Figures 4A et 4B sont des vues schématique, respectivement latérale et en coupe longitudinale, d'une âme magnétique du dispositif de conditionnement magnétique de la Figure 2 qui est maintenue entre les raccords d'entrée et de sortie ;
- la Figure 5 est une vue schématique latérale de l'un des dispositifs de dynamisation à vortex de la Figure 1 ;
- les Figure 6A et 6B sont des vues schématiques, respectivement latérale et de face, d'un raccord disposé à l'entrée d'une section de tube du dispositif de dynamisation à vortex de la Figure 5 ; et
- les Figure 7A et 7B sont des vues schématiques, respectivement latérale et de face, d'un raccord disposé à la sortie de la section de tube du dispositif de dynamisation à vortex de la Figure 5 .

### MODES DE RÉALISATION DE L'INVENTION

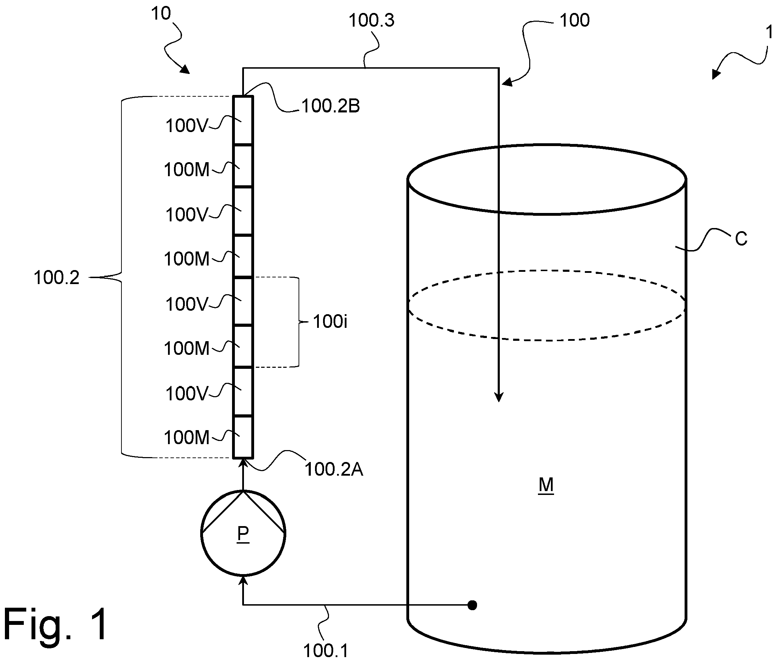

La présente invention sera décrite en référence à divers modes de réalisation préférés tels qu'illustrés notamment par les Figures 1 à 7A-B.

La Figure 1 est une vue schématique d'une installation de conditionnement, désignée globalement par la référence numérique 1, selon un mode de réalisation préféré de l'invention. Cette installation de conditionnement 1 comporte un système de conditionnement 10 comprenant au moins un circuit de conditionnement 100 apte à permettre une circulation d'un jus ou liquide contenant des sucres destinés à subir un processus de fermentation alcoolique, ici du moût ou jus de raisins M qui est stocké dans une cuve C (ou autre espace de stockage adéquat, telle une barrique).

Le circuit de conditionnement 100 comprend une conduite d'amenée 100.1 apte à permettre le prélèvement du jus ou liquide M depuis la cuve C, une conduite de conditionnement 100.2 couplée à une entrée 100.2A à la conduite d'amenée 100.1 et apte à être traversée par le jus ou liquide M, ainsi qu'une conduite de sortie 100.3 couplée à une sortie 100.2B de la conduite de conditionnement 100.2 et apte à permettre la délivrance du jus ou liquide M conditionné au moyen de la conduite de conditionnement 100.2. Dans l'exemple, illustré, la conduite de sortie 100.3 retourne le jus ou liquide M conditionné (au moins une première fois) vers la même cuve C, de sorte que le jus ou liquide M puisse subir plusieurs cycles de conditionnement.

L'installation de conditionnement 1 illustrée dans la Figure 1 comporte par ailleurs une pompe P apte à assurer la circulation du jus ou liquide M au travers du circuit de conditionnement 100. Dans l'exemple illustré, la pompe P est placée dans la conduite d'amenée 100.1, mais l'on comprendre que cette pompe pourrait être disposée dans toute autre portion adéquate du circuit de conditionnement 100.

Dans d'autres modes de réalisation, le jus ou liquide M conditionné peut être délivré dans une autre cuve ou un autre espace de stockage adéquat. Dans les faits, la conduite de sortie du circuit de conditionnement pourrait comprendre deux embranchements distincts, l'un permettant de retourner le jus ou liquide conditionné M vers la cuve C, l'autre vers une autre cuve (ou autre espace de stockage).

Dans l'exemple illustré, un seul circuit de conditionnement 100 est prévu, mais l'on comprendra que plusieurs circuits de conditionnement pourraient éventuellement être agencés en parallèle. De même, plusieurs conduites de conditionnement 100.2 pourraient être prévues en parallèle dans un même circuit de conditionnement.

Selon l'invention, la conduite de conditionnement 100.2 comporte au moins un dispositif de conditionnement magnétique (voire électromagnétique), désigné 100M, qui est destiné à soumettre le jus ou liquide M à une action magnétique. Dans l'exemple, illustré, la conduite de conditionnement 100.2 comporte dans les faits préférablement l'agencement en série de plusieurs (ici au nombre de quatre) segments de conduite 100i comportant chacun un dispositif de conditionnement magnétique (voire électromagnétique) 100M. Dans la suite de la présente description, lorsqu'il est fait référence à la notion de « conditionnement magnétique », l'on comprendra qu'il est indifféremment fait référence à un conditionnement opéré au moyen de dispositifs et/ou d'éléments magnétiques ou électromagnétiques. Chaque segment de conduite 100i comporte par ailleurs un dispositif de dynamisation, désigné 100V, agencé en série, après le dispositif de conditionnement magnétique 100M, lequel dispositif de dynamisation 100V est apte à soumettre le jus ou liquide M à une agitation mécanique, en particulier selon un cheminement sensiblement hélicoïdal ou tourbillonnant. Dans le cas particulier illustré, un dispositif de dynamisation 100V est disposé après chaque dispositif de conditionnement magnétique 100M.

Le dispositif de conditionnement magnétique 100M pourrait prendre diverses formes. À titre particulièrement préféré, le dispositif de conditionnement magnétique 100M est d'un type connu en soi, tel que décrit par exemple dans la demande internationale (PCT) No. WO 86/04887 A1, dont le contenu est incorporé ici par référence dans son intégralité. Le dispositif de conditionnement magnétique 100M décrit dans la demande internationale (PCT) No. WO 86/04887 A1 est utilisé classiquement dans des conduites d'eau courante pour habitations dans le but de réduire ou éviter les dépôts calcaires. L'utilisation de ce type de dispositifs à ces fins a démontré son efficacité. À la connaissance de l'inventeur, l'utilisation d'un tel dispositif de conditionnement magnétique dans le but de conditionner des jus ou liquides contenant des sucres en vue de leur fermentation alcoolique n'a pas été suggérée dans l'état de la technique encore moins explorée avec attention.

Le conditionnement opéré au moyen du système de conditionnement selon l'invention a notamment pour finalité d'augmenter l'équilibre des particules et ions en solution dans le jus ou liquide conditionné grâce à l'action magnétique, tout en dynamisant ce jus ou liquide grâce à l'agitation mécanique ultérieure. De bénéfices qualitatifs notables ont en particulier pu être constatés suite à divers tests réalisés sur des moûts et jus de raisins en vue de leur vinification.

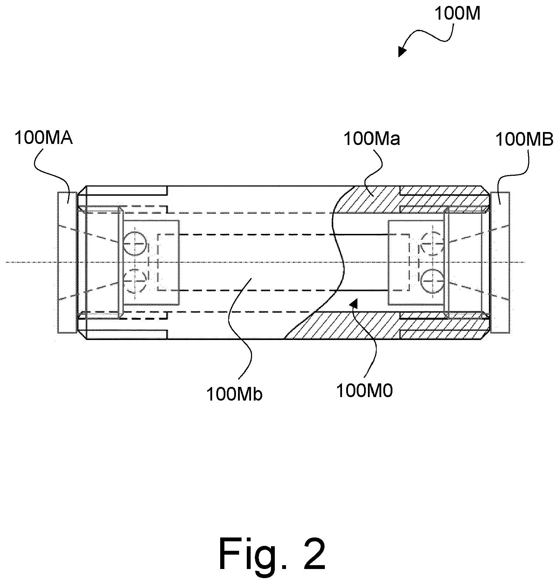

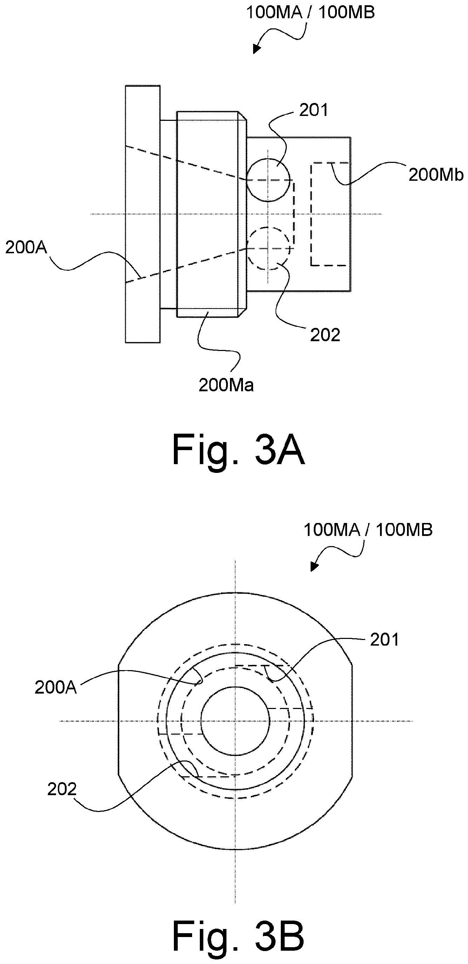

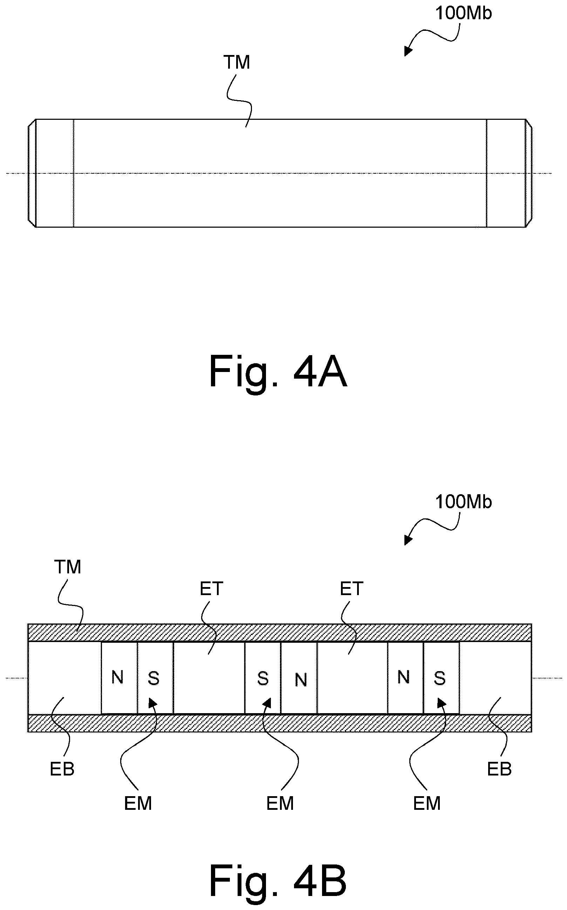

La Figure 2 est une vue schématique latérale de l'un des dispositifs de conditionnement magnétique 100M de la Figure 1, lequel comporte une section de tube 100Ma à l'intérieur de laquelle est disposée une âme magnétique 100Mb (illustrée plus spécifiquement dans les Figures 4A et 4B) de sorte à ce que le jus ou liquide M puisse circuler au travers de la section de tube 100Ma et autour de l'âme magnétique 100Mb, à savoir dans un espace intercalaire, désigné 100M0 subsistant entre l'âme magnétique 100Mb et la circonférence interne de la section de tube 100Ma. À chaque extrémité de la section de tube 100Ma est disposé un raccord d'entrée 100MA, respectivement un raccord de sortie 100MB, qui assure le passage du jus ou liquide M, ainsi que le maintien de l'âme magnétique 100Mb (voir également les Figures 3A et 3B).

Comme illustré dans les Figures 3A et 3B, les raccords d'entrée et de sortie 100MA, 100MB présentent chacun un orifice d'entrée, respectivement de sortie 200A (ici de forme sensiblement conique) qui communique avec une paire d'ouvertures latérales 201, 202 qui sont ici décalées l'une de l'autre, de part et d'autre de l'axe longitudinal. Cet agencement des ouvertures latérales 201, 202 permet avantageusement d'imprimer un mouvement de rotation du jus ou liquide M autour de l'âme magnétique 100Mb.

Dans l'exemple illustré, les raccords d'entrée et de sortie 100MA, 100MB présentent chacun une portion filetée 200Ma qui est dimensionnée est configurée pour être rendue solidaire d'une extrémité correspondante de la section de tube 100Ma, elle-même pourvue d'un taraudage correspondant (non référencé). Par ailleurs, les raccords d'entrée et de sortie 100MA, 100MB présentent en outre chacun un alésage 200Mb qui est dimensionné pour coopérer avec une extrémité correspondante de l'âme magnétique 100Mb et ainsi maintenir l'âme magnétique 100Mb à l'intérieur de la section de tube 100Ma (comme illustré dans la Figure 2)

Comme illustré dans l'exemple préféré des Figures 4A et 4B, l'âme magnétique 100Mb comprend pour l'essentiel un élément tubulaire TM à l'intérieur duquel sont agencés plusieurs éléments magnétique EM séparés par des entretoises ET. Plus spécifiquement, les éléments magnétiques EM sont agencés de sorte qu'ils forment une alternance d'éléments magnétiques de pôles inversés EM (ici au nombre de trois) séparés par les entretoises ET (ici au nombre de deux). Des embouts EB faisant office de bouchons sont par ailleurs disposés à chaque extrémité de l'élément tubulaire TM.

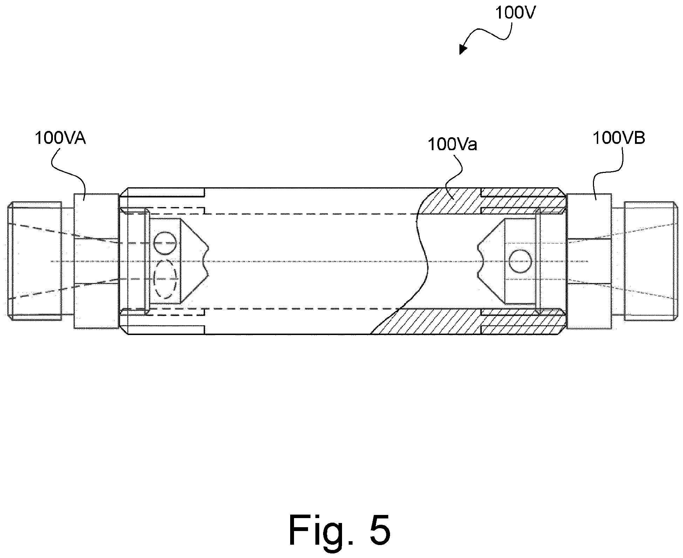

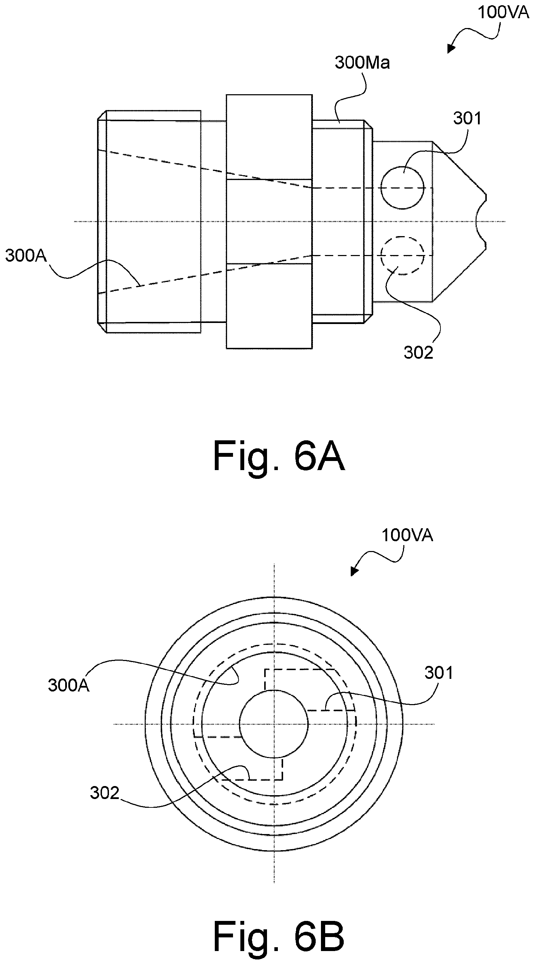

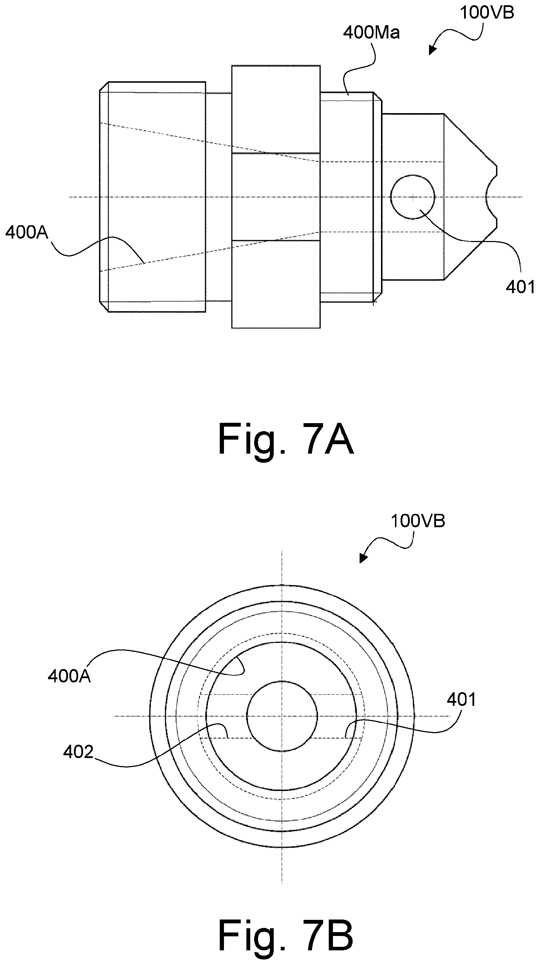

La Figure 5 est une vue schématique latérale de l'un des dispositifs de dynamisation 100V de la Figure 1, lequel comporte une section de tube 100Va aux extrémités de laquelle sont disposés un raccord d'entrée 100VA et un raccord de sortie 100VB qui assurent le passage du jus ou liquide M au travers de la section de tube 100Va (voir également les Figures 6A-B et 7A-B).

Dans l'exemple préféré illustré, chaque dispositif de dynamisation 100V est plus particulièrement configuré de sorte à générer un vortex à l'intérieur de la section de tube 100Va entre l'entrée 100VA et la sortie 100VB du dispositif de dynamisation 100V. Pour ce faire, les raccords d'entrée et de sortie 100VA et 100VB sont spécifiquement configurés pour induire ce vortex.

Eu égard à la forme de réalisation illustrée dans les Figures 6A et 6B, l'on peut ainsi constater que le raccord d'entrée 100VA présente un orifice d'entrée, 300A (ici de forme sensiblement conique) qui communique avec une paire d'ouvertures latérales 301, 302 qui sont ici décalées l'une de l'autre, de part et d'autre de l'axe longitudinal. La géométrie de la partie terminale du raccord d'entrée 100VA, disposée en aval des ouverture latérales 301, 302 est également choisie de sorte à favoriser la formation d'un vortex et permettre son maintien. Dans l'exemple illustré, le raccord d'entrée 100VA présente en outre une portion filetée 300Ma qui est dimensionnée est configurée pour être rendue solidaire de l'extrémité correspondante de la section de tube 100Va, elle-même pourvue d'un taraudage correspondant (non référencé).

Comme illustré dans les Figures 7A et 7B, le raccord de sortie 100VB est sensiblement similaire au raccord d'entrée 100VA et comporte de même un orifice de sortie 400A qui communique avec une paire d'ouvertures latérales 401, 402, ainsi qu'une portion filetée 400Ma qui est dimensionnée est configurée pour être rendue solidaire de l'autre extrémité de la section de tube 100Va, elle-même pourvue d'un taraudage correspondant (non référencé). Le raccord de sortie 100VB diffère du raccord d'entrée 100VA de par l'agencement des ouvertures latérales 401, 402 qui sont ici disposées dans un même plan et orientées selon des directions opposées.

L'agencement des raccords d'entrée et de sortie 100VA, 100VB susmentionnés permet ainsi de générer un vortex au sein de la section de tube 100Va de sorte à soumettre le jus ou liquide M traversant le dispositif de dynamisation 100V à une agitation mécanique, en l'occurrence selon un cheminement tourbillonnant, qui assure une dynamisation du jus ou liquide traversant le système de conditionnement 10.

Des tests réalisés au moyen d'un prototype de l'installation de conditionnement représentée schématiquement dans les Figures ont permis de constater un effet bénéfique sur le jus ou liquide ainsi conditionné, à savoir une réduction significative de la prolifération de moisissures, sans ajouts d'additifs antioxydants et antiseptiques. Des tests qualitatifs et gustatifs ont par ailleurs mis en évidence un effet bénéfique sur les arômes et les saveurs, ainsi que sur le développement du vin lors de sa vinification, sans pour autant faire usage d'additifs tels que des sulfites.

Comme déjà mentionné, le jus ou liquide M est préférablement soumis à plusieurs cycles de conditionnement. En particulier, des bénéfices significatifs ont pu être constatés après deux à quatre cycles successifs.

Les débits de traitement du jus ou liquide seront adaptés en fonction des besoins et de la nature du jus ou liquide devant être conditionné, ainsi que, notamment, sa viscosité. En pratique, les débits de traitement peuvent être de l'ordre de 50 litres par heure à 1'000 litres à l'heure en fonction du dimensionnement de l'installation.

L'on comprendra de manière générale que diverses modifications et/ou améliorations évidentes pour l'homme du métier peuvent être apportées aux modes de réalisation décrits dans la présente description sans sortir du cadre de l'invention défini par les revendications annexées.

En particulier, bien que l'invention soit notamment applicable au conditionnement de moûts ou jus de raisins dans le cadre d'un processus de vinification, l'invention est fondamentalement applicable à tout conditionnement de jus ou liquides contenant des sucres en vue de leur fermentation alcoolique, qu'il s'agisse de jus ou liquides provenant d'un pressage de fruits ou d'autres sources adaptées. L'on pourra en d'autres termes appliquer l'invention au conditionnement de tout autre jus ou liquide destiné à un processus de fermentation alcoolique, par exemple pour la production de cidres ou d'autres alcools ou boissons alcoolisées.

De plus, il convient de relever que les dispositifs de conditionnement magnétique (ou électromagnétique) pourraient présenter toute autre configuration adéquate. Ainsi, il pourrait être envisageable, dans d'autres modes de réalisation, de disposer les éléments magnétiques (ou électromagnétiques) requis à l'extérieur d'une section de tube correspondante (plutôt que dans une âme magnétique (ou électromagnétique) comme décrit en référence aux Figures 2 à 4A-B. L'utilisation de dispositifs de conditionnement à âme magnétique (ou électromagnétique) reste toutefois préférée en ce sens qu'elle apparaît conduire à des résultats bénéfiques probants.

De plus, l'on pourrait envisager, dans une autre forme d'exécution, de combiner le conditionnement magnétique (ou électromagnétique) et la dynamisation du jus ou liquide dans un même dispositif.

### LISTE DES SIGNES DE RÉFÉRENCE UTILISÉS DANS LA PRÉSENTE DESCRIPTION ET DANS LES DESSINS

- 1: installation de conditionnement selon un mode de réalisation préféré de l'invention
- 10: système de conditionnement selon un mode de réalisation préféré de l'invention
- 100: circuit de conditionnement du système de conditionnement 10
- 100.1: conduite d'amenée du circuit de conditionnement 100
- 100.2: conduite de conditionnement du circuit de conditionnement 100
- 100.2A: entrée de la conduite de conditionnement 100.2 couplée à la conduite d'amenée 100.1
- 100.2B: sortie de la conduite de conditionnement 100.2 couplée à la conduite de sortie 100.3
- 100.3: conduite de sortie du circuit de conditionnement 100
- 100i: segments de conduite de conditionnement
- 100M: dispositif de conditionnement magnétique (ou électromagnétique)
- 100Ma: section de tube du dispositif de conditionnement magnétique 100M
- 100Mb: âme magnétique (ou électromagnétique)
- 100M0: espace intercalaire entre âme magnétique 100Mb et circonférence interne de la section de tube 100Ma
- TM: élément tubulaire de l'âme magnétique 100Mb
- EM: éléments magnétiques (ou électromagnétiques) de l'âme magnétique (ou électromagnétique) 100Mb
- ET: entretoises de l'âme magnétique 100Mb
- EB: embouts disposés aux extrémités de l'âme magnétique 100Mb
- 100MA: entrée du dispositif de conditionnement magnétique 100M / raccord d'entrée
- 100MB: sortie du dispositif de conditionnement magnétique 100M / raccord de sortie
- 100V: dispositif de dynamisation
- 100Va: section de tube du dispositif de dynamisation 100V
- 100VA: entrée du dispositif de dynamisation 100V / raccord d'entrée
- 100VB: sortie du dispositif de dynamisation 100V / raccord de sortie
- 200A: orifice d'entrée/sortie du raccord d'entrée/sortie 100MA/100MB
- 201: (première) ouverture latérale du raccord d'entrée/sortie 100MA/100MB
- 202: (seconde) ouverture latérale du raccord d'entrée/sortie 100MA/100MB
- 200Ma: filetage du raccord d'entrée/sortie 100MA/100MB pour vissage sur l'extrémité correspondante de la section de tube 100Ma
- 200Mb: alésage du raccord d'entrée/sortie 100MA/100MB pour tenue de l'extrémité correspondante de l'âme magnétique 100Mb
- 300A: orifice d'entrée du raccord d'entrée 100VA
- 301: (première) ouverture latérale du raccord d'entrée 100VA
- 302: (seconde) ouverture latérale du raccord d'entrée 100VA
- 300Ma: filetage du raccord d'entrée 100VA pour vissage sur l'extrémité correspondante de la section de tube 100Va
- 400A: orifice de sortie du raccord de sortie 100VB
- 401: (première) ouverture latérale du raccord de sortie 100VB
- 402: (seconde) ouverture latérale du raccord de sortie 100VB
- 400Ma: filetage du raccord de sortie 100VB pour vissage sur l'extrémité correspondante de la section de tube 100Va
- M: jus ou liquide contenant des sucres destiné à un processus de fermentation alcoolique, en particulier moût ou jus de raisins
- C: cuve (ou autre espace de stockage) contenant le jus ou liquide M

## Revendications

1. Un système de conditionnement (10) de jus ou liquides (M) contenant des sucres en vue de leur fermentation alcoolique, comprenant au moins un circuit de conditionnement (100) apte à permettre une circulation d'un jus ou liquide (M) contenant des sucres, tels des jus ou moûts de fruits,
ledit circuit de conditionnement (100) comprenant :
- une conduite d'amenée (100.1) apte à permettre le prélèvement du jus ou liquide (M) depuis une cuve (C) ou autre espace de stockage du jus ou liquide (M),
- une conduite de conditionnement (100.2) couplée à une entrée (100.2A) à la conduite d'amenée (100.1) et apte à être traversée par le jus ou liquide (M) ; et
- une conduite de sortie (100.3) couplée à une sortie (100.2B) de la conduite de conditionnement (100.2) et apte à permettre la délivrance du jus ou liquide (M) conditionné au moyen de la conduite de conditionnement (100.2) vers une cuve (C) ou autre espace de stockage du jus ou liquide (M) conditionné,
la conduite de conditionnement (100.2) comportant l'agencement en série d'au moins un dispositif de conditionnement magnétique ou électromagnétique (100M) destiné à soumettre le jus ou liquide (M) à une action magnétique et d'au moins un dispositif de dynamisation (100V) apte à soumettre le jus ou liquide (M) à une agitation mécanique.

2. Le système de conditionnement (10) selon la revendication 1, **caractérisé en ce que** la conduite de conditionnement (100.2) comporte l'agencement en série de plusieurs segments de conduite (100i) comportant chacun l'agencement en série d'un dispositif de conditionnement magnétique ou électromagnétique (100M) et d'un dispositif de dynamisation (100V).

3. Le système de conditionnement (10) selon la revendication 1 ou 2, **caractérisé en ce que** chaque dispositif de dynamisation (100V) est apte à soumettre le jus ou liquide (M) à une agitation mécanique selon un cheminement sensiblement hélicoïdal ou tourbillonnant.

4. Le système de conditionnement (10) selon la revendication 3, **caractérisé en ce que** chaque dispositif de dynamisation (100V) comporte une section de tube (100Va) et est configuré de sorte à générer un vortex à l'intérieur de la section de tube (100Va) entre une entrée (100VA) et une sortie (100VB) du dispositif de dynamisation (100V).

5. Le système de conditionnement (10) selon la revendication 4, **caractérisé en ce que** la section de tube (100Va) est pourvue d'un raccord d'entrée (100VA) et d'un raccord de sortie (100VB) configurés pour induire ledit vortex.

6. Le système de conditionnement (10) selon l'une quelconque des revendications précédentes, **caractérisé en ce que** chaque dispositif de conditionnement magnétique ou électromagnétique (100M) comporte une section de tube (100Ma) à l'intérieur de laquelle est disposée une âme magnétique ou électromagnétique (100Mb) de sorte à ce que le jus ou liquide (M) soit conduit à circuler au travers d'un espace intercalaire (100M0) subsistant entre l'âme magnétique ou électromagnétique (100Mb) et une circonférence interne de la section de tube (100Ma).

7. Le système de conditionnement (10) selon la revendication6, **caractérisée en ce que** l'âme magnétique ou électromagnétique (100Mb) comporte une alternance d'éléments magnétiques ou électromagnétiques de pôles inversés (EM) séparés par des entretoises (ET),
et **en ce que** les éléments magnétiques ou électromagnétiques (EM) séparés par les entretoises (ET) sont préférablement agencés à l'intérieur d'un élément tubulaire (TM) retenu à chaque extrémité à l'intérieur de la section de tube (100Ma).

8. Le système de conditionnement (10) selon la revendication 6 ou 7, **caractérisé en ce que** la section de tube (100Ma) est pourvue d'un raccord d'entrée (100MA) et d'un raccord de sortie (100MB) configurés pour maintenir l'âme magnétique ou électromagnétique (100Mb) à l'intérieur de la section de tube (100Ma),
lesquels raccords d'entrée et sortie (100MA, 100MB) sont préférablement configurés pour induire un mouvement de rotation du jus ou liquide (M) autour de l'âme magnétique ou électromagnétique (100Mb).

9. Utilisation du système de conditionnement (10) selon l'une quelconque des revendications précédentes pour le conditionnement de jus ou liquides (M) contenant des sucres en vue de leur fermentation alcoolique.

10. Utilisation du système de conditionnement (10) selon l'une quelconque des revendications 1 à 8 pour le conditionnement de moûts ou jus de raisins (M) dans le cadre d'un processus de vinification.

11. Une installation de conditionnement (1) de jus ou liquides (M) contenant des sucres en vue de leur fermentation alcoolique, comprenant un système de conditionnement (10) selon l'une quelconque des revendications 1 à 8 couplé à une pompe (P) apte à assurer la circulation du jus ou liquide (M) au travers du circuit de conditionnement (100) et au moins une cuve de stockage (C) contenant le jus ou liquide (M) à conditionner.

12. L'installation de conditionnement (1) selon la revendication 11, **caractérisé en ce que** la conduite d'amenée (100.1) et la conduite de sortie (100.3) du système de conditionnement (10) sont couplées à une même cuve de stockage (C) afin de soumettre le jus ou liquide (M) à un ou plusieurs cycles de conditionnement, en particulier deux à quatre cycles.

13. Un procédé de conditionnement de jus ou liquides (M) contenant des sucres en vue de leur fermentation alcoolique, comprenant la circulation d'un jus ou liquide (M) contenant des sucres, tels des jus ou moûts de fruits, dans un circuit de conditionnement (100) configuré de sorte à soumettre le jus ou liquide (M) circulant au travers du circuit de conditionnement (100) à une action magnétique ainsi qu'à une dynamisation par agitation mécanique.

14. Le procédé de conditionnement selon la revendication 13, mettant en oeuvre le système de conditionnement (10) selon l'une quelconque des revendications 1 à 8 ou l'installation de conditionnement (1) selon la revendication 11 ou 12.

15. Le procédé de conditionnement selon la revendication 13 ou 14, mis en oeuvre pour le conditionnement de moûts ou jus de raisins (M) dans le cadre d'un processus de vinification.
